# EUROPÄISCHE PATENTSCHRIFT

(11) **EP 0 731 040 B1**
(45) Veröffentlichungstag und Bekanntmachung des Hinweises auf die Patenterteilung: **08.09.1999**
(21) Anmeldenummer: 95103117.8
(22) Anmeldetag: 04.03.1995
(51) Int. Cl.: B65G 21/14

(54) **Knickbares Förderband mit definierter Spannung des Tragorgans**
Articulated belt conveyor with defined tension of the support means
Convoyeur à bande articulé avec tension prédéterminée de l'organe de support

(43) Veröffentlichungstag der Anmeldung: 11.09.1996
(73) Patentinhaber: MTF Technik Schürfeld GmbH & Co. KG, 51702 Bergneustadt (DE)
(72) Erfinder: Schürfeld, Hans Gert, D-51702 Bergneustadt (DE)
(74) Vertreter: Stenger, Watzke & Ring Patentanwälte

(56) Entgegenhaltungen:
- DE-A- 3 544 708
- FR-A- 2 648 445
- GB-A- 2 096 083
- GB-A- 2 108 918

## Beschreibung

Die Erfindung betrifft ein Förderband, bestehend aus einem Traggestell, einem darüber geführten und mittels eines Antriebs angetriebenen Tragorgan, welches an den Enden des Traggestells über Trommeln umgelenkt ist, wobei das Traggestell an wenigstens einer Stelle um eine quer zur Förderbandlängsrichtung liegende Achse abknickbar eine Umlenktrommel an einem Schieberelement angeordnet ist.

Gattungsgemäße Förderbänder sind im Stand der Technik hinlänglich bekannt. Derartige Förderbänder bestehen üblicherweise aus einem Traggestell, welches auf unterschiedlichste Weise aufgebaut sein kann. Grundsätzlich läuft das Obertrum des Tragorgans über das Traggestell und wird dabei unterstützt, sei es durch Tragrollen, Wannen oder dergleichen, oder besteht aus eigensteifen Gliedern. Je nach Tragorgan werden Gurtförderer oder Gliederförderer unterschieden. So können Gurte der unterschiedlichsten Art ebenso eingesetzt werden wie Stahlgewebe, Platten, Ketten und dergleichen. Moderne Traggestelle sind leiterartig aus mit Querverbindern verbundenen, im wesentlichen zueinander parallelen Längsholmen aufgebaut. An den Förderbandenden sind Trommeln angeordnet, um das Tragorgan umzulenken. Dabei kann vorgesehen sein, daß eine der Umlenktrommeln gleichzeitig auch Antriebstrommel ist. Auch können Antriebstrommeln oder Antriebsrollen außerhalb des Tragorgans angeordnet sein, so daß an den Enden reine Umlenkrollen verwendet werden. Das Traggestell weist bei gattungsgemäßen Förderbändern eine Trennstelle auf, auf welchen es um ein Gelenk geknickt werden kann. Selbstverständlich wird auch das Tragorgan entsprechend mitgeknickt. Es entstehen dann Steilbandbereiche und Flachbandbereiche.

Förderbänder können mehrere Knickstellen aufweisen. Oberhalb des sogenannten Obertrums bzw. auch unterhalb des sogenannten Untertrums können Auflager- oder Tragrollen bzw. Trommeln angeordnet sein.

Bei gattungsgemäßen Förderbändern verändert sich offensichtlich die Spannung des Tragorgans in Abhängigkeit vom Knickwinkel. Gegenüber Förderbändern ohne jeglichen Tragorganausgleich sind Förderbänder bekannt, bei denen entweder über eine Umlenktrommel oder eine zusätzliche Spanntrommel über federbelastete Lagerarme ein Tragorganausgleich erzielt wird. Dazu werden Federn, Gasdruckfedern und dgl. verwenden. Diese haben eine Federkonstante und spannen das Tragorgan nach, wenn es durch die Anordnung eines Förderbandknicks gelockert ist. Erfahrungsgemäß nimmt die Tragorganspannung bei kritischen Verstellwinkeln zwischen 0° und 20° erheblich zu. Üblicherweise liegt der Drehpunkt im Knick. Die Tragorganspannung wird aufgrund der Federn innerhalb eines geringen Spektrums variiert. Ein wesentlicher Nachteil vorbekannter Förderbänder besteht darin, daß sich das jeweilige am Inneren des Knicks liegende Trum des Tragorgans infolge der aufgebrachten Spannung wölbt. Dies kann so weit gehen, daß das Tragorgan aus seiner Führung herauskommt, zumindest jedoch ist ein definierter Lauf des Tragorgans nicht mehr gewährleistet. Ein weiterer Nachteil der vorbekannten Förderbänder besteht darin, daß infolge der Verwendung von Federelementen die Vorspannung unbhängig vom Knickwinkel ist.

Ein gattungsgemäßes Förderband ist in der FR-A-2648445 offenbart, welche ein knickbares Förderband zeigt, bei dem eine Umlenkrolle am Ende eines stabförmigen Schieberelementes angeordnet ist, welches seinerseits mit seinem freien Ende an einer festen Position auf der der Knickachse gegenüberliegenden Seite des Förderbandes fixiert ist. Bei Bewegungen von Teilen des Förderbandes um die Knickachse verändert sich automatisch die Strecke von dem Fixpunkt des Schieberelementes zur Umlenkrolle und damit automatisch die Umlenkrollenposition. Eine Steuerung der Umlenkrollenposition in Abhängigkeit vom Knickwinkel ist nicht vorgesehen.

Ausgehend von diesem Stand der Technik liegt der vorliegenden Erfindung die **Aufgabe** zugrunde, ein Förderband der gattungsgemäßen Art dahingehend weiterzubilden, daß eine definierte Spannung des Tragorgans bei jedem beliebigem Knickwinkel gewährleistet ist. Darüber hinaus soll das Förderband einfach aufgebaut und hinsichtlich der Ausführung von Bandknicken einfach ausgebildet sein.

Zur technischen **Lösung** wird ein gattungsgemäßes Förderband durch das Schieberelement über ein im Bereich der nächstliegenden Knickstelle angeordnetes Kurvengelenk, gebildet aus einem Nocken und einer Kurve, von denen eines am Schieberelement und eines an dem Traggestellteil angeordnet ist, welches relativ zu dem das Schieberelement tragenden Traggestellteil beweglich ist, in Förderbandlängsrichtung bewegbar ist, weitergebildet.

Durch die erfindungsgemäße Ausgestaltung des Förderbands ist es möglich, eine direkte Beziehung zwischen dem Knickwinkel und der auf die Umlenkrolle und damit auf die von der Umlenkrolle auf das Tragorgan übertragene Vorspannung herzustellen. Die Bezeichnung Umlenktrommel soll im Sinne der Erfindung so verstanden werden, daß auch eine zusätzliche Spanntrommel, die neben ansonsten vorgesehenen Umlenktrommeln angeordnet ist, die beschriebene Funktion der Tragorganlenkung und -spannung übernimmt. Auch ist es in einem derartigen Fall denkbar, daß das Schieberelement in einem Winkel zur Förderbandlängsrichtung verschiebbar ist.

Das im Bereich der Knickstelle angeordnete Kurvengelenk besteht in üblicher Weise aus einer Kurve und einem Nocken, welche an zwei relativ zueinander bewegbaren Elementen angeordnet sind. Diese relativ zueinander bewegbaren Elemente müssen eine definierte Position zu den relativ zueinander bewegbaren Traggestellteilen haben. Werden zur Bildung eines Knickes die Traggestellteile zueinander um eine im wesentlichen quer zur Förderbandlängsrichtung liegende Achse angewinkelt, bewegen sich somit die Kurvengelenkelemente relativ zueinander, so daß das Schieberelement, welches entweder direkt oder über eine Kulisse mit einem der Kurvengelenkelemente verbunden ist, entlang seiner Längsachse bewegt wird. Dadurch wird auch die am Schieberelement angeordnete Umlenkrolle bewegt, so daß die auf das Tragorgan übertragene Spannung variiert wird.

Durch die Ausbildung der Kurve kann die Tragorganspannung damit in Abhängigkeit vom Knickwinkel definiert variiert werden.

In vorteilhafter Weise wird vorgeschlagen, daß auf beiden Seiten des Förderbandes Schieberelemente angeordnet sind, so daß die Umlenkrolle an ihren beiden Enden mit einem Schieberelement verbunden ist. Beide Schieberelemente sind dann mit entsprechenden, im Bereich des Knickes angeordneten Kurvengelenken in Verbindung und können die entsprechenden beschriebenen Bewegungen ausführen. In vorteilhafter Weise sind die Schieberelemente an bzw. in Längsholmen des Traggestells geführt. Mit besonderem Vorteil wird vorgeschlagen, daß jedes Schieberelement aus wenigstens zwei in Längsrichtung relativ zueinander verschiebbaren Teilen gebildet ist. Durch diese Maßnahme ist es möglich, mittels einer Spannvorrichtung die Basislänge des Schieberelementes und damit die Grundvorspannung und den Gleichlauf des Tragorgans festzulegen. In vorteilhafter Weise kann die Spanneinrichtung federbelastet sein, so daß zusätzlich zu der durch das Kurvengelenk geführten Spannungssteuerung auch ein federbelasteter Spannungsausgleich erfolgen kann. Dies ist insbesondere dann von Vorteil, wenn das Material des Tragorgans nicht elastisch ist. Die Federvorspannung dient dann dazu, das Kurvengelenk in Verbindung zu halten, da ansonsten der Schieber nicht in einem geführten Anschlag wäre.

Weiterhin ermöglicht die erfindungsgemäße Ausgestaltung in vorteilhafter Weise, die Knickachse außerhalb oder innerhalb des Tragorgans zu positionieren.

Die beschriebene erfindungsgemäße Ausgestaltung gewährleistet einen einfachen Aufbau des Förderbandes und eine definierte Spannung des Tragorgans bei jedem beliebigem Knickwinkel.

In vorteilhafter Weise wird vorgeschlagen, daß das Kurvengelenk aus einem am Schieberelement angeordneten Nocken und einer Kurve gebildet ist, die an dem relativ zu dem das Schieberelement tragenden Traggestellteil beweglichen Traggestellteil angeordnet ist. Selbstverständlich muß das jeweilige Schieberelement nicht selbst den Nocken tragen, sondern kann mit einer entsprechenden Kulisse verbunden sein. Alternativ kann auch am Schieberelement eine Kurve angeordnet sein, die mit einem an dem jeweils zu dem das Schieberelement tragenden Traggestellteil beweglichen Traggestellteil angeordneten Nocken zusammenwirkt.

Schließlich ist es auch möglich, das Kurvengelenk so auszubilden, daß im Bereich einer Hinterkante des Schieberelementes eine Kurve ausgebildet ist, die mit einem Nocken zusammenwirkt, oder die Hinterkante mit einer nockenartigen Kurve in Getriebeverbindung steht.

Wesentlich für die Ausbildung des Kurvengelenkes ist nur, daß durch das Knicken zweier Traggestellteile relativ zueinander die Rotationsbewegung um die Knickachse in eine Längsbewegung des Schieberelementes umgesetzt wird, so daß eine entsprechende Vorspannung über die am Schieberelement angeordnete Umlenkrolle auf das Tragorgan übertragen werden kann.

Weitere Vorteile und Merkmale der Erfindung ergeben sich aus der folgenden Beschreibung anhand der Figuren. Dabei zeigen:
- Fig. 1: eine schematische Seitenansicht eines Ausführungsbeispiel eines Förderbandes;
- Fig. 2: eine Seitenansicht des Förderbandes gemäß Fig. 1 in gestreckter Position;
- Fig. 3: eine Draufsicht auf das Förderband gemäß Fig. 2;
- Fig. 4: eine Seitenansicht eines weiteren Ausführungsbeispiel eines Förderbandes;
- Fig. 5: eine Darstellung des Förderbandes gemäß Fig. 4 in einer gestreckten Position;
- Fig. 6: eine schematische Seitenansicht eines weiteren Ausführungsbeispiels eines Förderbandes;
- Fig. 7: eine schematische seitliche Detailansicht eines Knickbereiches;
- Fig. 8: eine Darstellung gemäß Fig. 7 in gestreckter Position;

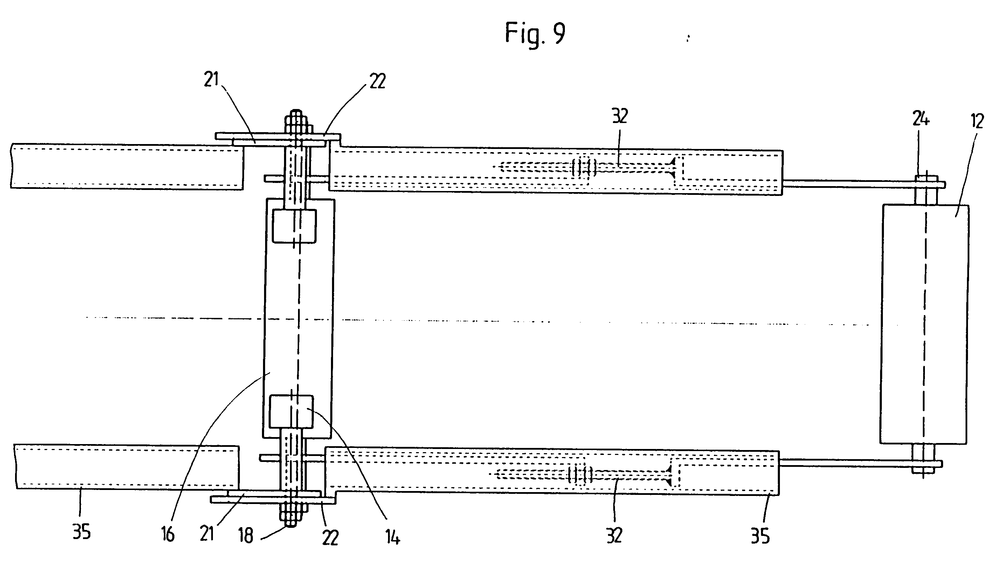

- Fig. 9: eine Draufsicht auf die Darstellung gemäß Fig. 8;
- Fig. 10: eine schematische seitliche Detaildarstellung einer Umlenkrollenanordnung mit eingefahrener Umlenkrolle;
- Fig. 11: eine Draufsicht auf die Darstellung gemäß Fig. 10 mit ausgefahrener Umlenkrolle;
- Fig. 12: eine Schnittdarstellung entlang der Linie XII-XII in Fig. 2;
- Fig. 13: eine schematische seitliche Detailansicht einer weiteren Umlenkrollenanordnung;
- Fig. 14: eine Darstellung gemäß Fig. 13 in gestreckter Position;
- Fig. 15: eine Draufsicht auf das Förderband in der Darstellung gemäß Fig. 14;
- Fig. 16: eine schematische Darstellung eines Ausführungsbeispiels für einen Schieber und ein Kurvengelenk;
- Fig. 17: eine Darstellung gemäß Fig. 16 einer alternativen Ausführungsform;
- Fig. 18: eine Darstellung gemäß Fig. 16 in einer weiteren alternativen Ausführungsform mit Vorspanneinrichtung;
- Fig. 19: eine schematische seitliche Detaildarstellung eines weiteren Ausführungsbeispiels eines Knickbereiches und
- Fig. 20: eine schematische seitliche Detaildarstellung eines weiteren Ausführungsbeispiels eines Knickbereiches.

Zu Zwecken der Anschaulichkeit wurden alle Seitenansichten ohne die Darstellung üblicher Seitenverkleidungen erstellt. In allen Draufsichten wurde aus dem gleichen Grund auf die Darstellung eines Tragorgans verzichtet.

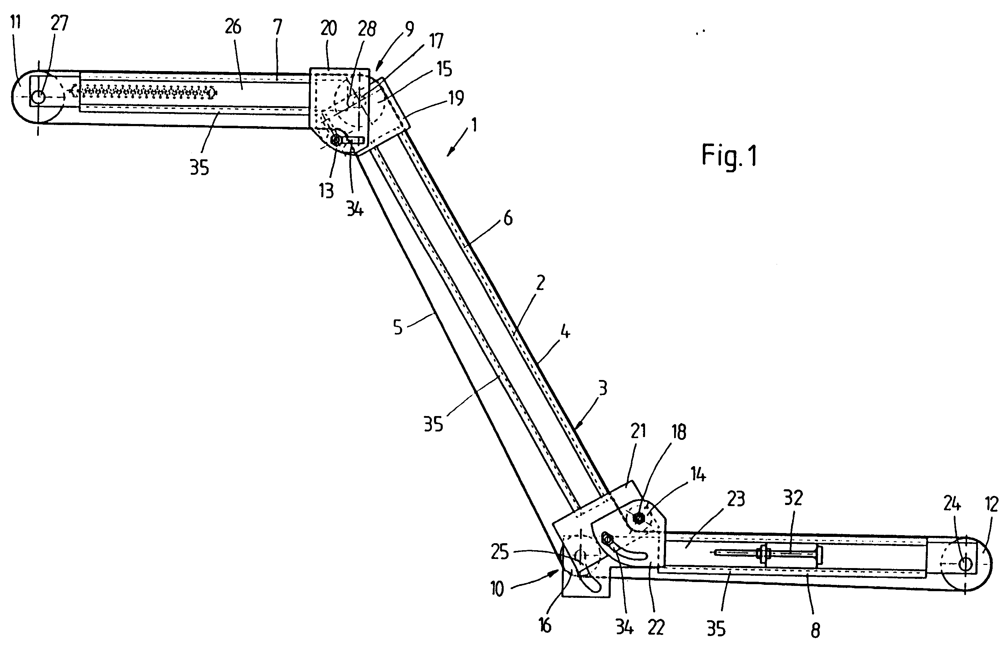

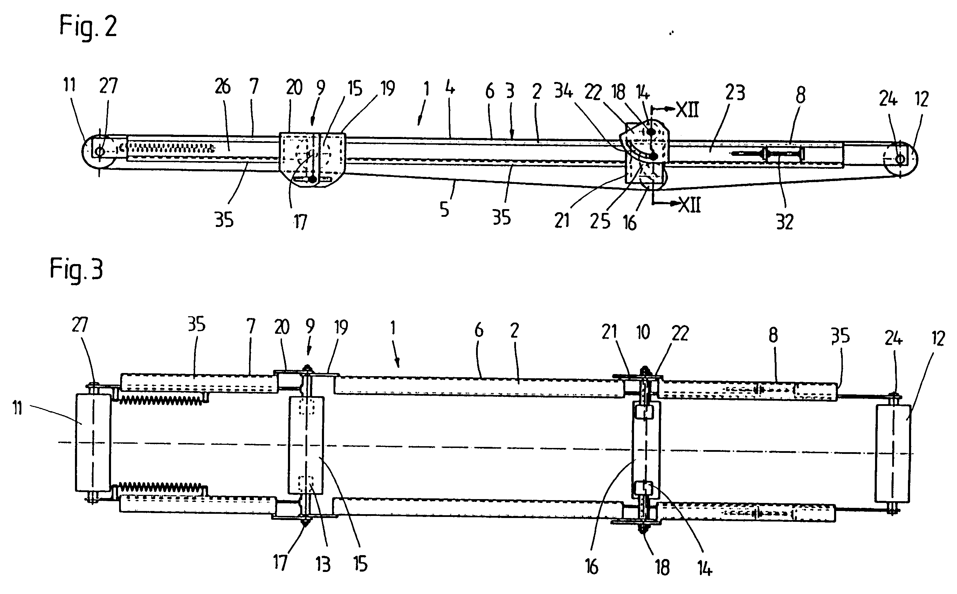

Bei dem in Fig. 1 gezeigten Ausführungsbeispiel für ein Förderband 1, welches in anderen Ansichten auch in den Figuren 2 und 3 gezeigt ist, handelt es sich um ein an beiden Enden abknickbares Förderband, welches als sogenanntes Z-Band bezeichnet wird. Das Ausführungsbeispiel zeigt einen Gurtförderer mit einem Traggestell 2, welches aus durch nicht dargestellte Querverbinder verbundenen Holmen 35 gebildet ist. Ein endloser Traggurt 3 wird über das Traggestell 2 geführt und durch eine nicht gezeigte Antriebsvorrichtung mit einer entsprechenden Antriebsrolle angetrieben. Der oben laufende Bandbereich wird mit Obertrum 4 bezeichnet, der unten laufende Bandbereich mit Untertrum 5. Das Traggestell umfaßt die aus den Holmen gebildeten drei Teile, nämlich das Mittelteil 6, und die Endteile 7 und 8. Zwischen dem Mittelteil 6 und dem oberen Endteil 7 ist eine positive Knickstelle 9 ausgebildet, zwischen dem Mittelteil 6 und dem unteren Endteil 8 eine negative Knickstelle 10. An beiden Enden läuft der Traggurt 3 um eine Umlenkrolle 11, 12. Derartige Umlenkrollen können auch als Antriebsrollen ausgestaltet sein. Im Bereich der Knickstellen 9, 10 sind sogenannte Auflagerrollen 13, 14 angeordnet, die den Traggurt 3 an diesen Stellen entsprechend halten. Das jeweils entgegengesetzte Trum läuft um eine Kurvenrolle 15, 16. Im gezeigten Ausführungsbeispiel liegen die Knickachse 17 innerhalb und die Knickachse 18 außerhalb des Traggurtes 3, im Falle der positiven Knickstelle 9 oberhalb des Untertrums 5, im Falle der negativen Knickstelle 10 oberhalb des Obertrums 4. Am Mittelteil 6 sind im Ausführungsbeispiel jeweils innere Knickflansche 19, 21 angeordnet, die fest mit dem jeweiligen Tragholm 35 verbunden sind. Mit den Tragholmen 35 der Endteile 7, 8 sind jeweils äußere Knickflansche 20, 22 fest verbunden. Die Flansche sind wiederum im Bereich der Knickstellen 9, 10 verbunden, und zwar im gezeigten Ausführungsbeispiel mit den Achsen der Auflagerrollen 13, 14. Eine einfache Stabilisationsführung 34 ist zwischen den Flanschen gebildet. Im gezeigten Ausführungsbeispiel sind an den beiden Endteilen 7, 8 jeweils ein Schieber 23, 26 angeordnet, die an einem Ende eine Befestigung 24, 27 für die jeweilige Umlenkrolle 11, 12 aufweisen und am anderen Ende an einem Kurvengelenk 25, 28 angeordnet sind. Die konkrete Ausgestaltung der einzelnen Bauelemente wird später noch detailliert beschrieben.

Der Vollständigkeit halber sei erwähnt, daß ein entsprechender Aufbau auch für alle anderen Arten von Förderbändern, beispielsweise Plattenförderbänder, Kettenförderer und dgl. einsetzbar ist.

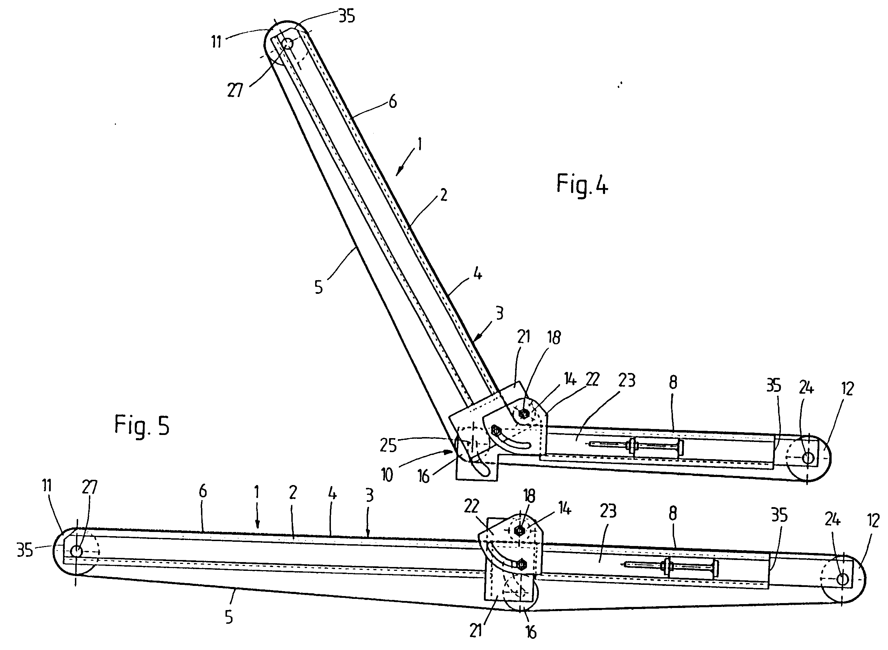

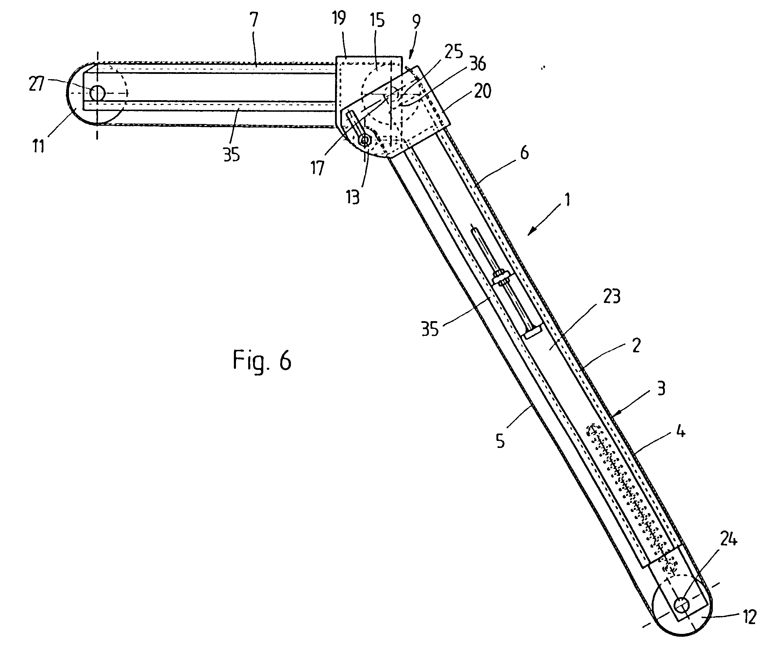

In den Figuren 4 bis 6 sind alternative Ausführungsformen entsprechender Förderbänder gezeigt. In Figur 4 ist ein sogenanntes N-Band gezeigt, welches aus zwei Teilen mit einem negativen Knick besteht. In Figur 6 ist ein entsprechendes P-Band gezeigt, welches aus zwei Teilen mit einem positiven Knick besteht. Gleiche Teile sind jeweils mit gleichen Bezugszeichen versehen.

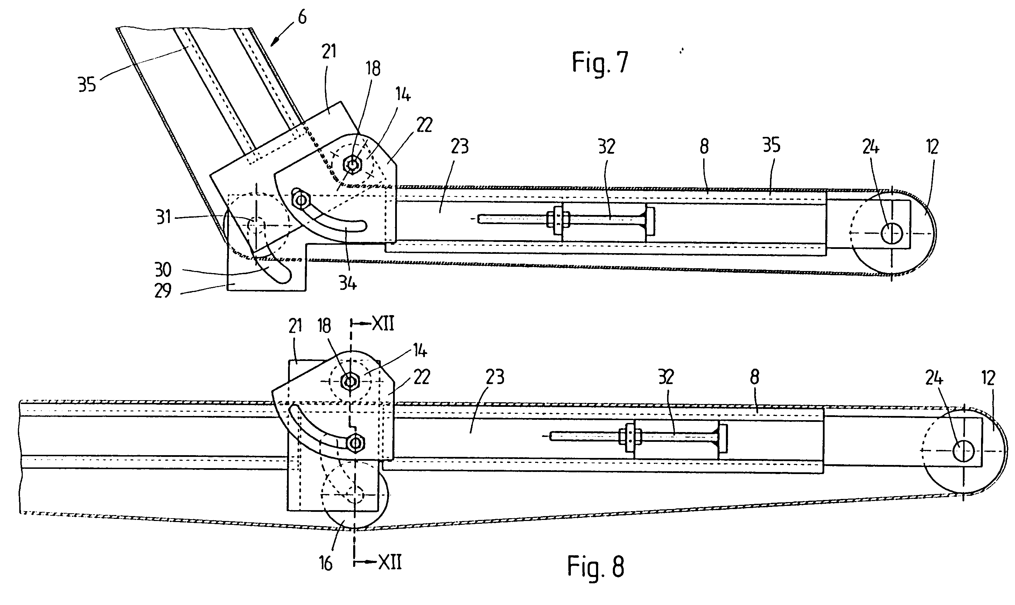

In der in Figuren 7 und 8 gezeigten Detaildarstellung ist das Zusammenwirken eines Kurvengelenks zu erkennen. Durch die Relativbewegung der inneren und äußeren Knickflansche 21, 22, die jeweils fest an den Holmen 35 des Mittelteils 6 bzw. des Endteils 8 befestigt sind, werden die Endteile 6, 8 entsprechend abgewinkelt. Im Holm 35 des Endteils 8 ist der Schieber 23 angeordnet, welcher an einem Ende die Befestigung 24 für die Umlenkrolle 12 aufweist. Der Schieber ist zweiteilig dargestellt und weist an der mittleren Trennstelle einen Spannbolzen 32 auf, um eine Grundspannung einstellen zu können. Am anderen Schieberende 29 ist die Kurve 30 ausgebildet, die mit einem am inneren Knickflansch 21 befestigten Nocken 31 zusammenwirkt. Im gezeigten Ausführungsbeispiel ist der Nocken 31 gleichzeitig die Welle der Kurvenrolle 16.

Wie die Detaildarstellung in den Figuren 7 bis 8 zeigt, wird zwangsläufig bei einem Abknicken des Mittelteils 6 und des Endteils 8, wobei das Mittelteil 6 das sogenannte Steilband und das abgeknickte Endteil 8 das sogenannte Flachband bildet, der Schieber 23 längsverschoben. Je nach Ausgestaltung der Kurve 30, die keineswegs eine wie gezeigte gleichmäßige Krümmung aufweisen muß, kann die Längsposition des Schiebers 23 von dem Knickwinkel abhängig gemacht werden. Entsprechend wird auch die Längsposition der Umlenkrolle 12 variiert, so daß bei jedem Knickwinkel eine definierte Spannung des Traggurtes 3 erzielbar ist.

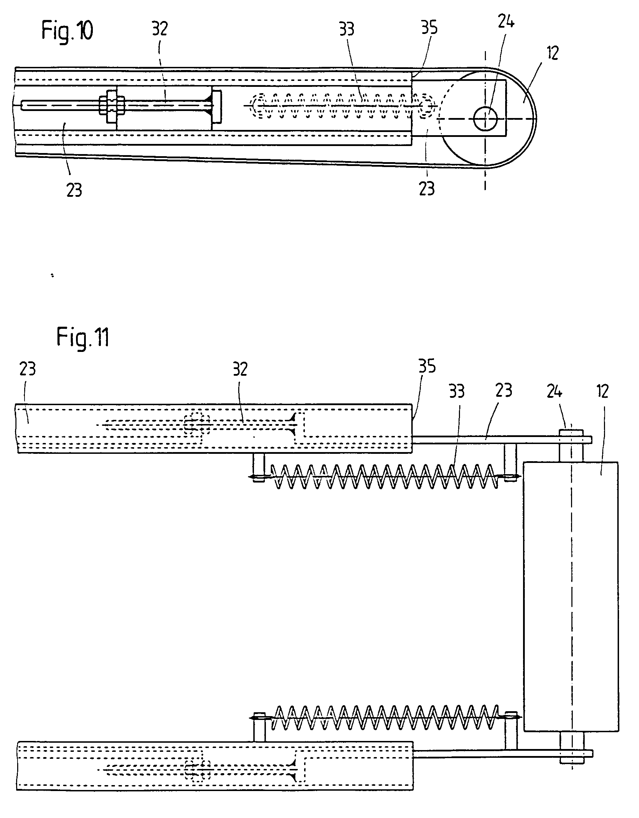

Eine alternative Ausführungsform ist in den Darstellungen der Figuren 10 und 11 gezeigt. Zusätzlich zu der bisher beschriebenen Ausgestaltung sind die Schieber 23 mittels Federn 33, die an den Tragholmen 35 des Förderbandes angeordnet sind, vorgespannt. Durch diese Maßnahme wird erreicht, daß die Schieber immer zum Knickpunkt hin gezogen werden, so daß das Kurvengelenk immer im Anschlag ist. Diese Ausgestaltung ist von Vorteil, wenn keine elastischen Tragorgane verwendet werden, so daß die Schieber im Kurvengelenkbereich aus dem Eingriff gelangen könnten.

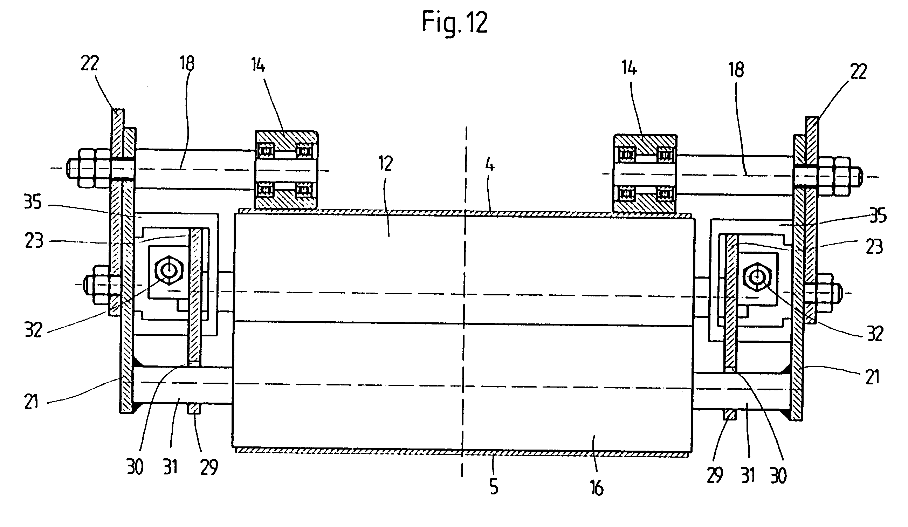

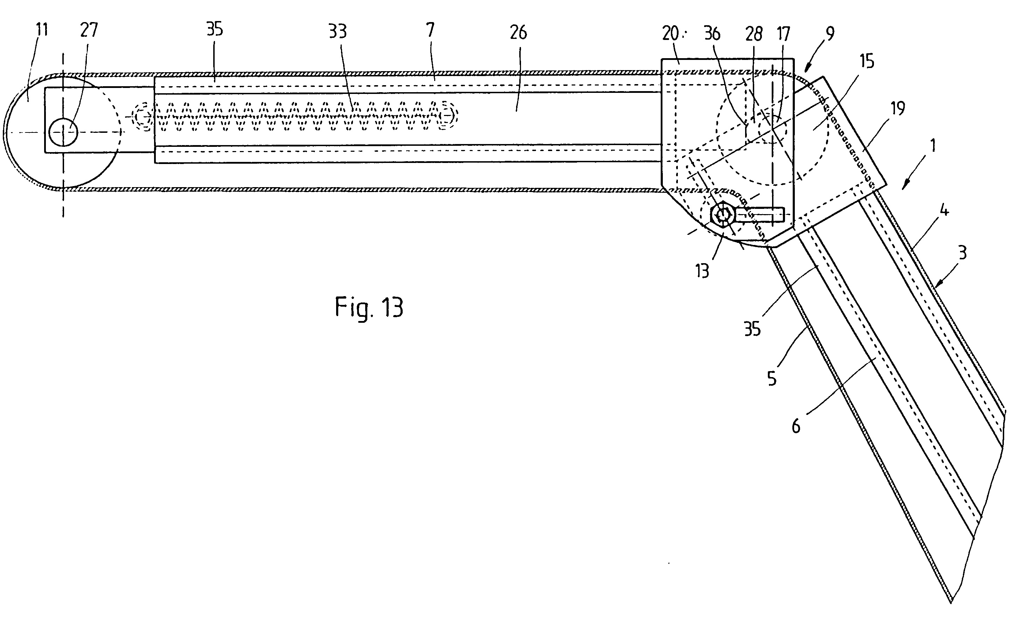

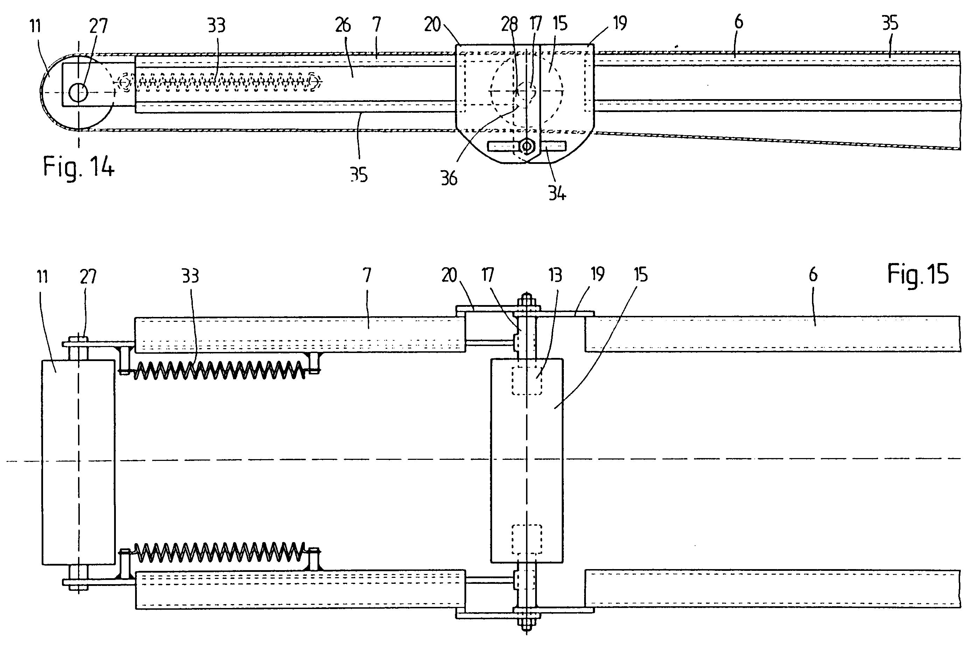

Eine detaillierte Schnittdarstellung eines Knickstellenbereiches ist in Figur 12 gezeigt. Eine alternative Knickstellenausgestaltung ist in den Figuren 13 bis 15 dargestellt, wo das Kurvengelenk durch eine Nockenscheibe gebildet ist, die mit dem hinteren Ende des Schiebers 26 zusammenwirkt. Die Nockenscheiben 36 befinden sich in diesem Fall im Bereich der Knickachse 17, welche wiederum mit den Knickflanschen 19 innen und somit mit den Holmen 35 fest verbunden sind.

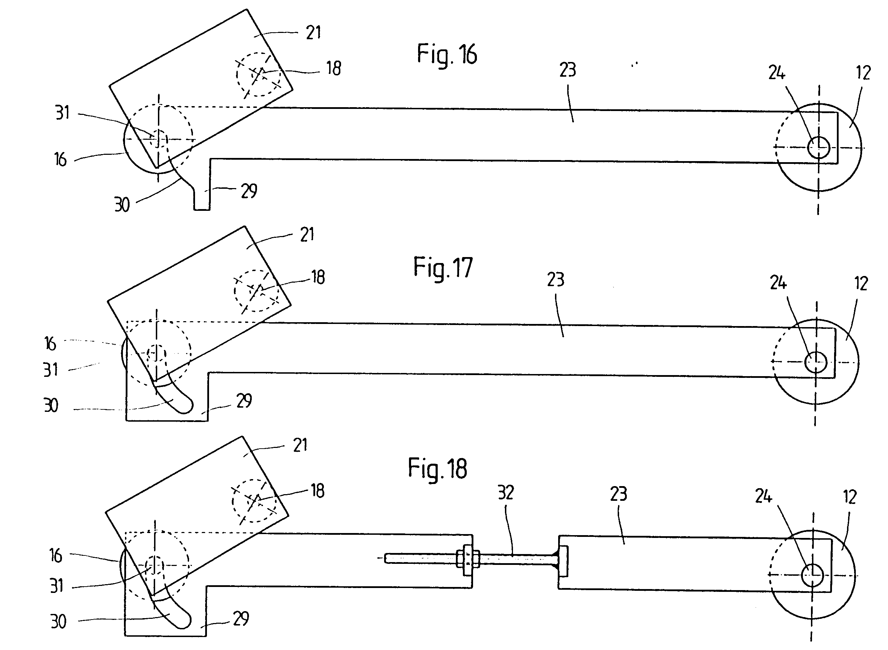

Einzelne Ausführungsbeispiele für Schieber und für Kurvengelenke sind in den Figuren 16 bis 18 dargestellt. Die Figur 16 zeigt einen normalen einstückigen Schieber, an dessen Schieberende 29 eine Kurve 30 ausgearbeitet ist, die mit einem Nocken 31 in der beschriebenen Weise zusammenwirkt. In der Figur 17 ist ein Schieber gezeigt, der die Kurve 30 als schlitzartige Kurve aufweist. Bei dem in Figur 18 gezeigten Ausführungsbeispiel ist zusätzlich ein Vorspannbolzen 32 eingesetzt. In den Ausführungsbeispielen gemäß Figur 17, 18 wird keine Feder benötigt, welche sonst bei nichtelastischen Tragorganen erforderlich ist, damit Nocke, Kurve und Schieber im Eingriff bleiben.

Beliebige Variationen von Schieberelementen und Kurvengelenken sind denkbar, Außerdem muß das Schieberelement nicht immer am Endteil angeordnet sein, wie das Ausführungsbeispiel in Figur 6 zeigt. Hier ist am Steilband ein entsprechendes Schieberelement 23 angeordnet.

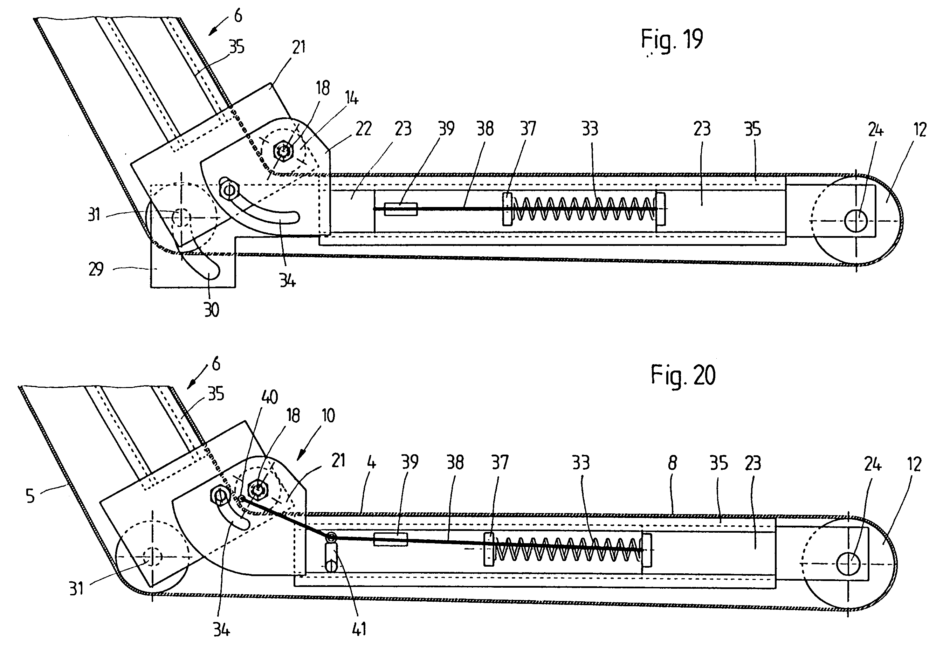

Bei dem in der Figur 19 dargestellten Ausführungsbeispiel entspricht die Knickstelle dem in den Figuren 7 und 8 gezeigten Ausführungsbeispiel. Der Schieber 23 ist zweigeteilt und das an der Umlenkrolle 12 angeordnete Schieberende wird von einer Feder 33, im gezeigten Ausführungsbeispiel eine Druckfeder, die sich gegen ein relativ zum Holm 35 festes Gegenlager 37 abstützt, von der Knickstelle weggedrückt. Das an der Knickstelle angeordnete Ende des Schiebers 23 weist an seinem Schieberende 29 die geschlossene Kurve 30 auf, die mit der Nocke 31 zusammenwirkt. Aufgrund der Verwendung der geschlossenen Kurve muß dieses Schieberende nicht federbelastet gegen die Nocke 31 vorgespannt werden. Die beiden Teile des Schiebers 23 sind durch ein Zugelement 38 verbunden, welches beispielsweise durch ein Stahlseil gebildet werden kann. Alternativ können auch Ketten, Riemen und ähnliche Elemente verwendet werden. Damit wird der Abstand zwischen den beiden Teilen des Schiebers 23 festgelegt und in Abhängigkeit von dem an der Knickstelle angeordneten Ende des Schiebers 23 bewegt sich zwangsläufig das an der Umlenkrolle angeordnete Ende des Schiebers 23 gleichförmig. Durch den Druck der Feder 33 können auch Vorschubbewegungen übertragen werden. Für den Bedarfsfall ist das Zugelement 38 mit einem Vorspanner 39 versehen, so daß die Länge des Zugelements 38 und damit der Abstand der beiden Teile des Schiebers 23 eingestellt werden können.

Bei dem in Figur 20 gezeigten Ausführungsbeispiel ist, entsprechend der eben beschriebenen Ausführungsweise, das an der Umlenkrolle 12 angeordnete Teil eines Schiebers 23 durch eine Druckfeder 33, die sich gegen ein am Holm ortsfest angeordnetes Gegenlager 37 abstützt, in einer von der Knickstelle 10 wegweisenden Richtung vorgespannt. Bei diesem Ausführungsbeispiel ist allerdings kein an der Knickstelle angeordnetes Teil eines Schiebers 23 vorgesehen. Vielmehr ist das Zugelement 38, welches am vorderen Teil des Schiebers 23 befestigt ist, an einer Anlenkung 40 des Knickflansches 21 befestigt, der sich seinerseits um die Knickachse 18 dreht. Im Bereich des Holms 35 ist noch eine Umlenkrolle 41 angeordnet, um das Zugelement 38 zu führen. Somit kann eine Drehung des Knickflansches 21 um die Knickachse 18, die zwangsläufig bei Einstellung eines Knicks erfolgt, in eine Längsverschiebung des vorderen Endes des Schiebers 23 umgesetzt werden. Das im Knickstellenbereich angelenkte Ende des Zugelements 38 kann auch an einer anderen der Knickeinstellung folgenden Einheit erfolgen. Auch im in Figur 20 gezeigten Ausführungsbeispiel weist das Zugelement 38 einen Vorspanner 39 auf, so daß die Basislänge einstellbar ist.

## Patentansprüche

1. Förderband (1), bestehend aus einem Traggestell (2), einem darüber geführten und mittels eines Antriebs angetriebenen Tragorgan (3), welches an den Enden des Traggestells (2) über Trommeln umgelenkt ist, wobei das Traggestell (2) an wenigstens einer Stelle um eine quer zur Förderbandlängsrichtung liegende Achse abknickbar ist und eine Umlenktrommel an einem Schieberelement (23, 26) angeordnet ist,
**dadurch gekennzeichnet**,
daß das Schieberelement über ein im Bereich der nächstliegenden Knickstelle angeordnetes Kurvengelenk (25, 28), gebildet aus einem Nocken (31) und einer Kurve (30), von denen eines am Schieberelement und eines an dem Traggestellteil angeordnet ist, welches relativ zu dem das Schieberelement tragenden Traggestellteil beweglich ist, in Förderbandlängsrichtung bewegbar ist.

2. Förderband nach Anspruch 1, dadurch gekennzeichnet, daß die Umlenktrommel (11, 12) an zwei im wesentlichen zueinander parallelen Schieberelementen angeordnet ist.

3. Förderband nach einem der vorhergehenden Ansprüche, dadurch gekennzeichnet, daß die Schieberelemente an Holmen des Traggestells geführt sind.

4. Förderband nach einem der vorhergehenden Ansprüche, dadurch gekennzeichnet, daß die Schieberelemente aus wenigstens zwei in Längsrichtung relativ zueinander verschiebbaren Teilen bestehen.

5. Förderband nach einem der vorhergehenden Ansprüche, dadurch gekennzeichnet, daß die Länge der Schieberelemente durch eine Spanneinrichtung einstellbar ist.

6. Förderband nach einem der vorhergehenden Ansprüche, dadurch gekennzeichnet, daß die Schieberelemente federbelastet positioniert sind.

7. Förderband nach einem der vorhergehenden Ansprüche, dadurch gekennzeichnet, daß die Knickachse außerhalb des Förderorgans angeordnet ist.

8. Förderband nach einem der vorhergehenden Ansprüche, dadurch gekennzeichnet, daß ein Element des Kurvengelenkes an der Hinterkante des Schieberelementes ausgebildet ist.

9. Förderband nach einem der vorhergehenden Ansprüche, dadurch gekennzeichnet, daß der Schieber (23, 26) aus wenigstens zwei Teilen besteht, die durch ein Zugelement (38) miteinander verbunden sind, wobei das durch die Bewegung des eines Teils des Schiebers (23) mitverschobene Teil des Schiebers (23) mittels Federkraft von dem erstgenannten Teil weggedrückt wird.

10. Förderband nach Anspruch 9, dadurch gekennzeichnet, daß das Zugelement (38) durch ein Stahlseil gebildet ist und einen Vorspanner (39) aufweist.

## Claims

1. Conveyor belt (1) consisting of a supporting frame (2), a supporting member (3) which is guided over said supporting frame, is driven by means of a drive and is deflected at the ends of the supporting frame (2) via drums, the supporting frame (2) being able to be bent at at least one location about an axis lying transversely with respect to the longitudinal direction of the conveyor belt and a deflecting drum being arranged on a slider element (23, 26), characterized in that the slider element can be moved in the longitudinal direction of the conveyor belt via a curved joint (25, 28) which is arranged in the region of the nearest bend and is formed from a cam (31) and a curve (30), one of which is arranged on the slider element and one on that supporting-frame part which can be moved relative to the supporting-frame part bearing the slider element.

2. Conveyor belt according to Claim 1, characterized in that the deflecting drums (11, 12) are arranged on two slider elements which are essentially parallel to each other.

3. Conveyor belt according to one of the preceding claims, characterized in that the slider elements are guided on struts of the supporting frame.

4. Conveyor belt according to one of the preceding claims, characterized in that the slider elements consist of at least two parts which can be displaced relative to one another in the longitudinal direction.

5. Conveyor belt according to one of the preceding claims, characterized in that the length of the slider elements can be adjusted by a tensioning device.

6. Conveyor belt according to one of the preceding claims, characterized in that the slider elements are positioned under spring loading.

7. Conveyor belt according to one of the preceding claims, characterized in that the bending axis is arranged outside the conveyor member.

8. Conveyor belt according to one of the preceding claims, characterized in that one element of the curved joint is formed on the rear edge of the slider element.

9. Conveyor belt according to one of the preceding claims, characterized in that the slider (23, 26) consists of at least two parts which are connected to one another by a tensile element (38), that part of the slider (23) which has been displaced along with the movement of the one part of the slider (23) being pushed away from that one part by means of spring force.

10. Conveyor belt according to Claim 9, characterized in that the tensile element (38) is formed by a steel cable and has a pretensioner (39).

## Revendications

1. Convoyeur à bande (1), composé d'un châssis (2), d'un organe de support (3) amené par dessus et actionné par engrenage, lequel organe de support est dévié aux extrémités du châssis (2) par des tambours, le châssis (2) pouvant être articulé au moins à un endroit autour d'un axe situé transversalement à la direction d'un convoyeur à bande et une poulie de renvoi étant disposée sur un élément coulissant (23, 26),
caractérisé par le fait que,
l'élément coulissant est disposé sur une articulation curviligne (25, 28) au niveau du point de flexion le plus proche, laquelle articulation est formée d'une came (31) et d'une patte incurvée (30) dont l'une est disposée sur l'élément coulissant et l'autre sur la partie du châssis, laquelle est mobile par rapport à la partie du châssis portant l'élément coulissant, est mobile dans la direction longitudinale du convoyeur à bande.

2. Convoyeur à bande, conformément à la revendication 1, caractérisé par le fait que, la poulie de renvoi (11, 12) est disposée sur deux éléments coulissants essentiellement parallèles l'un par rapport à l'autre.

3. Convoyeur à bande, conformément à l'une des revendications précédentes, caractérisé par le fait que, les éléments coulissants sont amenés sur les longerons du châssis.

4. Convoyeur à bande, conformément à l'une des revendications précédentes, caractérisé par le fait que, les éléments coulissants se composent d'au moins deux
parties pouvant être déplacées dans le sens longitudinal l'un par rapport à l'autre.

5. Convoyeur à bande, conformément à l'une des revendications précédentes, caractérisé par le fait que la longueur des éléments coulissants est réglable par un dispositif de tension.

6. Convoyeur à bande, conformément à l'une des revendications précédentes, caractérisé par le fait que les éléments coulissants sont positionnés par ressort.

7. Convoyeur à bande, conformément à l'une des revendications précédentes, caractérisé par le fait que l'axe de flexion est disposé à l'extérieur de l'organe de convoyage.

8. Convoyeur à bande, conformément à l'une des revendications précédentes, caractérisé par le fait qu'un élément de l'articulation curviligne est formé sur l'arête arrière de l'élément coulissant.

9. Convoyeur à bande, conformément à l'une des revendications précédentes, caractérisé par le fait que le coulisseau (23, 26) se compose d'au moins deux parties qui sont raccordées par un élément de traction (38), la partie du coulisseau (23) déplacée par le mouvement de l'une des parties du coulisseau (23) est décomprimée de la première partie nommée par la puissance du ressort.

10. Convoyeur à bande, conformément à la revendication 9, caractérisé par le fait que l'élément de traction (38) est formé par un câble en acier et présente un dispositif de précontrainte (39).
